# EUROPÄISCHE PATENTSCHRIFT

(11) **EP 0 927 676 B1**
(45) Veröffentlichungstag und Bekanntmachung des Hinweises auf die Patenterteilung: **30.07.2003**
(21) Anmeldenummer: 98119733.8
(22) Anmeldetag: 20.10.1998
(51) Int. Cl.: B62B 3/14

(54) **Stapelbarer Transportwagen**
Nestable transport cart
Chariot de transport emboîtable

(30) Priorität: 29.12.1997 DE 19758052
(43) Veröffentlichungstag der Anmeldung: 07.07.1999
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- WO-A-93/25398
- FR-A- 2 759 049
- US-A- 5 669 100

## Beschreibung

Die Erfindung betrifft einen stapelbaren Transportwagen, der in einen gleichen Transportwagen platzsparend einschiebbar ist, dessen eine Ladeplattform tragendes Fahrgestell vorne und hinten mit Lenkrollen ausgestattet ist und einen von der Vorderseite des Fahrgestelles nach rückwärts gerichteten Rahmenabschnitt aufweist, der eine weitere Lenkrolle trägt, wobei am Rahmenabschnitt ein Sperrmechanismus vorgesehen ist, der die weitere Lenkrolle mit Hilfe eines Sperrteiles am Schwenken zu hindern vermag und wobei das Sperrteil dann seiner Sperrfunktion enthoben ist, wenn beim Stapelvorgang ein weiterer Transportwagen in den Transportwagen eingeschoben ist.

Dokument WO 93 253 98 zeigt einen Transportwagen gemäß Oberbegriff von Anspruch 1

Es ist ein Transportwagen der hier vorliegenden Art bekannt, dessen Sperrteil unter Federkraft stehend zum Eingriff in die am Rahmenabschnitt angeordnete Lenkrolle bestimmt ist. Das Sperrteil trägt einen Anschlag, an welchen die Stirnseite des Fahrgestelles eines in den Transportwagen einzuschiebenden weiteren Transportwagens anstößt und dadurch das Sperrteil aus seiner die Schwenkbeweglichkeit der Lenkrolle verhindernden Lage bewegt. Ein solcher Sperrmechanismus ist aus Dokument FR 2759 049 bekannt. Der so gestaltete Sperrmechanismus weist neben dem Sperrteil und dem Anschlag zwei Druckfedern auf. Lager- und Stützteile müssen vorgesehen sein, um die Funktion des Sperrmechanismusses zu garantieren und die so konstruierte Anordnung ist innerhalb des rohrförmigen Rahmenabschnittes eingebaut. Ein erster Nachteil des so gestalteten Transportwagens besteht darin, dass der Sperrmechanismus durch eine Vielzahl von Teilen gestaltet ist, die hohe Fertigungskosten bewirken. Ein weiterer, ebenfalls entscheidender Nachteil besteht darin, dass durch das federkraftbelastete Sperrteil mit Anschlag, letzterer versucht, einen eingeschobenen Transportwagen aus dem mit einem vorausbefindlichen Transportwagen eingenommenen Stapelverbund wieder zu lösen. Dieser Umstand macht sich insbesondere dann in nachteiliger Weise bemerkbar, wenn ein Stapel mehrerer ineinandergeschobener Transportwagen bewegt werden soll. Die durch die Druckfedern der einzelnen Sperrmechanismen ausgelösten dynamischen.

Kräfte führen automatisch zu einem gegenseitigen Lösen der ineinandergeschobenen Transportwagen, so daß ein sicheres Führen und Bewegen eines Stapels solcher Transportwagen nicht oder nur schlecht möglich ist.

Die Aufgabe der Erfindung besteht darin, einen gattungsgemäßen Transportwagen so zu gestalten, dass die eben beschriebenen Nachteile vermieden werden.

Die Lösung der gestellten Aufgabe besteht darin, dass der Sperrmechanismus am hinteren Bereich des Rahmenabschnittes angeordnet ist, dass ferner das Sperrteil auf einer horizontalen Achse verschwenkbar gelagert ist und dass das Sperrteil zum Zwecke des Entsperrens der Lenkrolle mit seinem oberen Bereich zum Anstoßen an das Fahrgestell des einzuschiebenden Transportwagens bestimmt ist.

Die vorgeschlagene Lösung verzichtet auf jegliche Druckfedern, so dass die Sperrmechanismen mehrerer Transportwagen kein Lösen oder Auseinanderdriften der in einem Stapelverbund befindlichen Transportwagen bewirken. Wie nachfolgend beschrieben, beschränkt sich der Sperrmechanismus des erfindungsgemäßen Transportwagens auch auf wesentlich weniger Teile als durch den Stand der Technik bekannt. Dadurch wird eine erhebliche Reduzierung der Fertigungskosten erzielt.

Durch die DE 28 03 003 C3 wird ein Transportwagen mit richtungsfeststellbaren Hinterrädern vorgeschlagen. An beiden Hinterrädern dieser Wagen ist je ein Sperrmechanismus in Form eines verschwenkbaren Sperrteiles vorgesehen, das zwischen die Gabelschenkel greift und ein Verschwenken der beiden als Lenkrollen gestalteten Hinterräder verhindert. Beim platzsparenden Ineinanderschieben mehrerer solcher, als Einkaufswagen gestalteter Transportwagen stoßen vom Fahrgestell ausgehende nach oben gerichtete und den Korb tragende Stützen an den Sperrteilen an und heben die Versperrung der Hinterräder des jeweils vorausbefindlichen Transportwagens auf.

Die genannte Patentschrift vermittelt keinerlei Hinweise, wo ein Sperrmechanismus an einem mit einer weiteren Lenkrolle ausgestatteten Rahmenabschnitt anzuordnen wäre und mit welchen Mitteln das Entsperren des Sperrmechanismusses beim Ineinanderschieben mehrerer Transportwagen möglich sein könnte. Die nach oben gerichteten Stützen des bekannten Transportwagens jedenfalls eignen sich hierzu nicht.

Gemäß einer ersten Ausführungsform der Erfindung bewirkt in vorteilhafter Weise die Unterseite des Fahrgestelles eines einzuschiebenden Transportwagens ein Auslenken des Sperrteiles eines vorausbefindlichen Transportwagens.

Bei einem zweiten Ausführungsbeispiel wird als zweckmäßig vorgeschlagen, einen über die Unterseite des Fahrgestelles nach unten hinausgehenden Vorsprung vorzusehen, der beim Ineinanderschiebevorgang zweier Transportwagen an das Sperrteil anschlägt und dieses auslenkt.

Die Erfindung wird anhand von Ausführungsbeispielen näher erläutert. Es zeigt
Fig. 1 einen Transportwagen;
Fig. 2 im Detail einen vorausbefindlichen und einen einzuschiebenden Transportwagen;
Fig. 3 ausschnittweise zwei ineinandergeschobene Transportwagen;
Fig. 4 eine weitere Variante sowie
Fig. 5 eine Draufsicht auf den vorderen Bereich des Fahrgestelles.

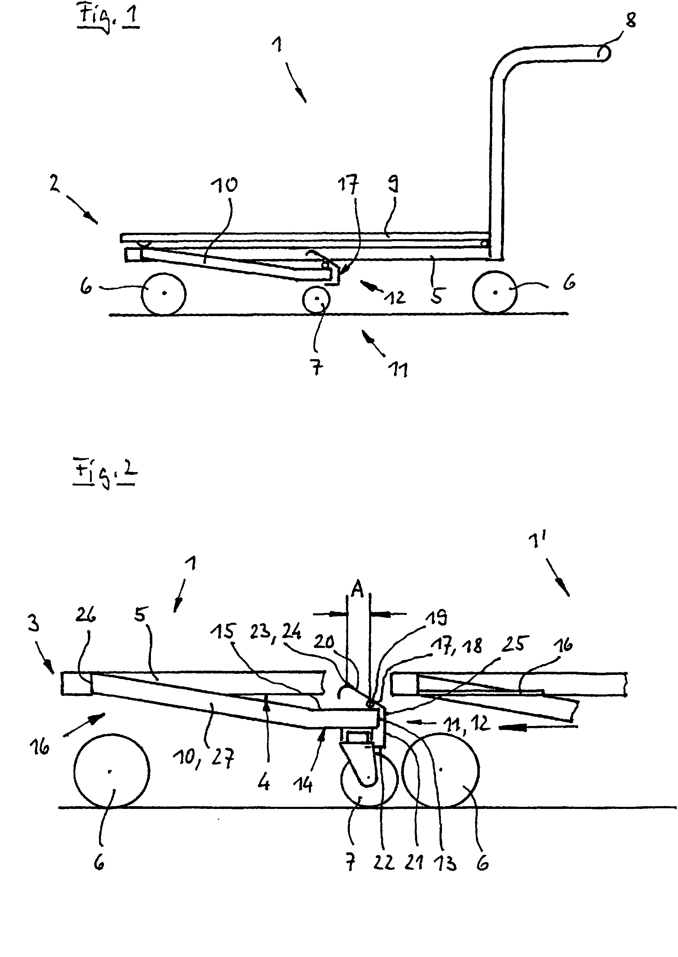

Der in Fig. 1 dargestellte Transportwagen 1 ist, seinen Grundaufbau betreffend, durch den allgemeinen Stand der Technik bekannt. Um den Transportwagen 1 platzsparend mit weiteren gleichen Transportwagen 1' stapeln zu können, weist der Transportwagen 1 in bekannter Weise ein hinten offenes, nach vorne sich verjüngendes Fahrgestell 5 auf, das vorne und hinten jeweils mit zwei Lenkrollen 6 ausgestattet ist. An seiner Rückseite befindet sich eine von beispielsweise zwei aufrechten Holmen getragene Schiebeeinrichtung 8. Das Fahrgestell 5 trägt eine Ladeplattform 9, die, um gleiche Transportwagen 1, 1' ineinanderschieben zu können, in bekannter Weise entweder vorne oder hinten um eine horizontale Achse anhebbar gelagert ist. Mittig angeordnet, und von der Vorderseite 2 des Fahrgestelles 5 ausgehend, erstreckt sich nach rückwärts ein Rahmenabschnitt 10, der im Bereich seines freien Endes 11 eine weitere Lenkrolle 7 trägt. Im hinteren Bereich 12 des Rahmenabschnittes 10 ist ein Sperrmechanismus 17 angeordnet, der imstande ist, die am Rahmenabschnitt 10 angeordnete Lenkrolle 7 beim Fahren des Transportwagens 1, 1' am Verschwenken um ihre vertikale Schwenkachse zu verhindern. Der Sperrmechanismus 17 kann in bekannter Weise so gestaltet sein, dass dieser entweder nur beim Vorwärtsfahren des Transportwagens 1, 1' wirksam ist oder aber grundsätzlich sperrend in die Lenkrolle 7 eingreift und beim Stapeln mit einem weiteren Transportwagen 1' vom einzuschiebenden Transportwagen 1' außer Funktion gesetzt wird. Das Unterbinden der Schwenkbeweglichkeit der Lenkrolle 7 erleichtert, wie bekannt, die Geradeausfahrt eines beladenen Transportwagens 1, 1'.

Fig. 2 zeigt ausschnittweise und geschnitten zwei Transportwagen 1, 1', wobei der in der Zeichnung rechts dargestellte Transportwagen 1' im Begriff ist, platzsparend in den vorausbefindlichen Transportwagen 1 eingeschoben zu werden. An der Unterseite 14 des Rahmenabschnittes 10 und im Bereich des freien Endes 11 des Rahmenabschnittes 10 angeordnet befindet sich die Lenkrolle 7. Im hinteren Bereich 12 des Rahmenabschnittes 10 ist der Sperrmechanismus 17 vorgesehen. Der Sperrmechanismus 17 weist ein Sperrteil 18 auf, das auf einer an der Oberseite 15 des Rahmenabschnittes 10 befindlichen, quer zur Längsrichtung des Transportwagens 1, 1' angeordneten horizontalen Achse 19 schwenkbar gelagert ist. Das Sperrteil 18 ist ein winkliges Gebilde, das einen in Schieberichtung des Transportwagens 1, 1' schräg nach oben ansteigenden Abschnitt 20 und daran anschließend in Schieberichtung des Transportwagens 1, 1' einen nach unten abfallenden Abschnitt 21, der mit seinem unteren Ende 22 versperrend in die Lenkrolle 7 eingreift. Der ansteigende Abschnitt 20 des Sperrteiles 18 ist bogenförmig nach unten gekrümmt, um so eine Anstoß- und Anlagefläche 23 für das Fahrgestell 5 eines einzuschiebenden Transportwagens 1' zu bilden. Der ansteigende Abschnitt 20 kann an seinem oberen Ende auch mit einem kleinen Rollelement versehen sein, das auf einer quer zur Schieberichtung des Transportwagens 1, 1' gelegenen Achse drehbar gelagert ist. Der höchste Punkt 24 der Anstoß- und Anlagefläche 23 liegt um das Maß A näher am vorderen Ende 3 des Transportwagens 1, 1' als die horizontale Achse 19 für das Sperrteil 18. Der Pfeil zeigt die Einfahrrichtung des hinteren einzuschiebenden Transportwagens 1'. Damit es beim Ineinanderschiebevorgang nicht zu Verklemmungen zwischen den Rahmenabschnitten 10, den Sperrmechanismen 17 und den Fahrgestellen 5 der Transportwagen 1, 1' kommt, sind die Rahmenabschnitte 10 von oben betrachtet in etwa V-förmig gestaltet, vgl. Fig. 5. Die Befestigungsabschnitte 26 des Rahmenabschnittes 10 sind an den beiden Enden des V-förmigen Rahmens 27 vorgesehen, während die Lenkrolle 7 sowie der Sperrmechanismus 17 in jenem Bereich angeordnet sind, in welchem die beiden Schenkel des V-förmigen Rahmens 27 zusammenstoßen. An der Unterseite 4 des Fahrgestelles 5 und mittig angeordnet ist eine Prallfläche 16 vorgesehen, an welcher das Sperrelement 18 mit seiner Anstoß- und Anlagefläche 23 beim Ineinanderschiebevorgang entlanggleitet. Das Sperrteil 18 ist hinter der hinteren Begrenzung 13 des Rahmenabschnittes 10 um diesen herumgeführt, d.h., die hintere Begrenzung 25 des Sperrteiles 18 ist weiter vom vorderen Ende 3 des Transportwagens 1, 1' entfernt als die hintere Begrenzung 13 des Rahmenabschnittes 10.

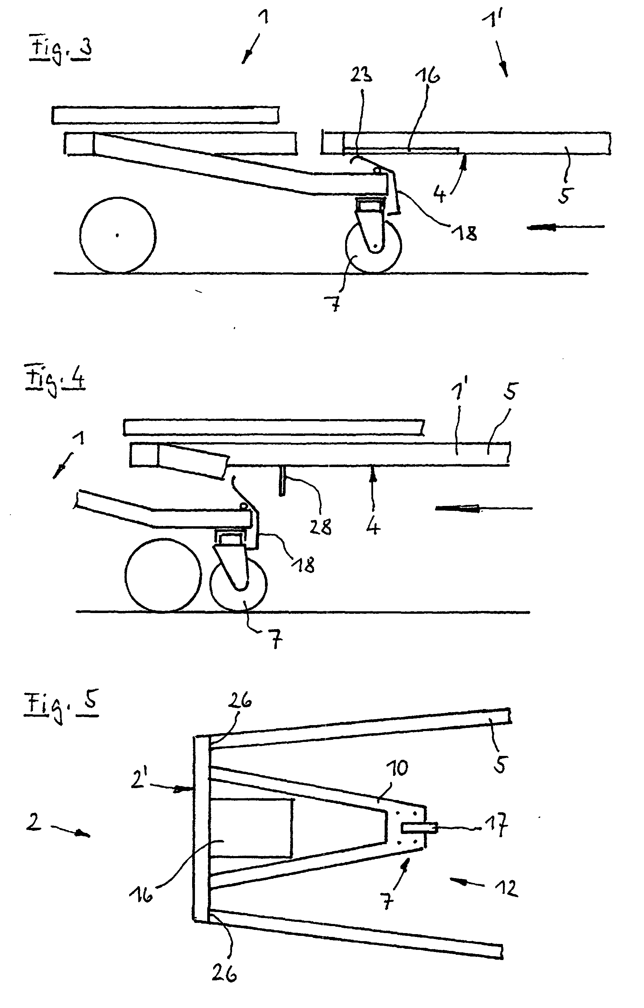

Fig. 3 zeigt ausschnittweise und im Schnitt die vorderen Bereiche zweier platzsparend ineinandergeschobener Transportwagen 1, 1'. Die Anstoß- und Anlagefläche 23 des Sperrteiles 18 des vorausbefindlichen Transportwagens 1 liegt an der Unterseite 4 des Fahrgestelles 5 des eingeschobenen Transportwagens 1' an. Im Beispiel ist dies die durch ein Blech gebildete Prallfläche 16. Das Sperrteil 18 ist in der Zeichnung linksdrehend verschwenkt, so dass die Versperrung der Lenkrolle 7 des Transportwagens 1 aufgehoben ist. Die Lenkrolle 7 lässt sich in dieser Lage um ihre vertikale Schwenkachse verschwenken. Sind mehr als zwei Transportwagen 1, 1' ineinandergeschoben, so sind, bis auf den zuletzt eingeschobenen Transportwagen 1' alle übrigen Sperrteile 18 und damit alle verbliebenen Sperrmechanismen 17 ihrer Funktion enthoben. Ein Stapel ineinandergeschobener Transportwagen 1, 1' lässt sich dadurch mühelos auf Kurvenbahnen bewegen. Dies ist sehr wichtig, wenn es z.B. in SB-Geschäften gilt, Transportwagen 1, 1' einzusammeln oder aus anderen Gründen stapelweise zu bewegen.

Eine weitere Variante zeigt Fig. 4. An der Unterseite 4 des Fahrgestelles 5 kann ein nach unten gerichteter Vorsprung 28 vorgesehen sein, der beim Ineinanderschieben zweier Transportwagen 1, 1' das Sperrteil 18 eines vorausbefindlichen Transportwagens 1 zum Zwecke der Entriegelung der Lenkrolle 7 verschwenkt.

Ergänzend zeigt Fig. 5 in einer Draufsicht die Vorderseite 2 des Fahrgestelles 5 des Transportwagens 1 mit dem Rahmenabschnitt 10, jedoch ohne Ladeplattform 9. Man erkennt die beiden auseinanderliegenden Befestigungsabschnitte 26 des Rahmenabschnittes 10, die mit dem Stirnholm 2' des Fahrgestelles 5 fest oder um eine horizontale Achse verschwenkbar verbunden sind. Derartige Anordnungen zählen zum Stand der Technik. Zwischen dem Rahmenabschnitt 10 ist die Prallfläche 16 am Fahrgestell 5 angeordnet. Im hinteren Bereich 12 des Rahmenabschnittes 10 sind der Sperrmechanismus 17 und die Lenkrolle 7 angeordnet.

## Patentansprüche

1. Transportwagen (1), der in einen gleichen Transportwagen (1') platzsparend einschiebbar ist, dessen eine Ladeplattform (9) tragendes Fahrgestell (5) vorne und hinten mit Lenkrollen (6) ausgestattet ist und einen von der Vorderseite (2) des Fahrgestelles (5) nach rückwärts gerichteten Rahmenabschnitt (10) aufweist, der eine weitere Lenkrolle (7) trägt, wobei am Rahmenabschnitt (10) ein Sperrmechanismus (17) vorgesehen ist, der die weitere Lenkrolle (7) mit Hilfe eines Sperrteiles (18) am Schwenken zu hindern vermag und wobei das Sperrteil (18) dann seiner Sperrfunktion enthoben ist, wenn beim Stapelvorgang ein weiterer Transportwagen (1') in den Transportwagen (1) eingeschoben ist, **dadurch gekennzeichnet, dass** der Sperrmechanismus (17) am hinteren Bereich (12) des Rahmenabschnittes (10) angeordnet ist, dass das Sperrteil (18) auf einer horizontalen Achse (19) verschwenkbar gelagert ist und dass das Sperrteil (18) zum Zwecke des Entsperrens der Lenkrolle (7) mit seinem oberen Bereich zum Anstoßen an das Fahrgestell (5) des einzuschiebenden Transportwagens (1') bestimmt ist.

2. Transportwagen nach Anspruch 1, **dadurch gekennzeichnet, dass** das Sperrteil (18) an seinem oberen Bereich entweder bogenförmig nach unten gekrümmt oder mit einem Rollelement ausgestattet ist, um eine Anstoß- oder Anlagefläche (23) zu bilden.

3. Transportwagen nach Anspruch 2, **dadurch gekennzeichnet, dass** der höchste Punkt (24) der Anstoß- oder Anlagefläche (23) näher am vorderen Ende (3) des Transportwagens (1, 1') angeordnet ist, als die horizontale Achse (19) für das Sperrteil (18).

4. Transportwagen nach einem der Ansprüche 1 bis 3, **dadurch gekennzeichnet, dass** der Rahmenabschnitt (10) V-förmig gestaltet ist, wobei in jenem Bereich, in welchem die Schenkel des V-förmigen Rahmens (27) zusammenstoßen, die Lenkrolle (7) und der Sperrmechanismus (17) angeordnet sind.

5. Transportwagen nach einem der Ansprüche 1 bis 4, **dadurch gekennzeichnet, dass** die Unterseite (4) des Fahrgestelles (5) zum Anstoßen an das Sperrteil (18) eines vorausbefindlichen Transportwagens (1) bestimmt ist.

6. Transportwagen nach einem der Ansprüche 1 bis 5, **dadurch gekennzeichnet, dass** an der Unterseite (4) des Fahrgestelles (5) eine für das Sperrteil (18) eines vorausbefindlichen Transportwagens (I) bestimmte Prallfläche (16) vorgesehen ist.

7. Transportwagen nach einem der Ansprüche 1 bis 6, **dadurch gekennzeichnet, dass** an der Unterseite (4) des Fahrgestelles (5) ein nach unten gerichteter Vorsprung (28) angeordnet ist, der zum Anstoßen an das Sperrteil (18) eines vorausbefindlichen Transportwagens (1) vorgesehen ist.

8. Transportwagen nach einem der Ansprüche 1 bis 7, **dadurch gekennzeichnet, dass** das Sperrteil (18) hinter einer hinteren Begrenzung (13) des Rahmenabschnittes (10) um diesen herumgeführt ist.

## Claims

1. A trolley (1) pushable into a like trolley (1') in a space-saving manner, the wheel frame (5) of which carries a loading platform (9), is fitted front and rear with casters (6) and has a frame portion (10) extending rearwards from the front (2) of the wheel frame (5) and carrying a further caster (7), wherein a locking mechanism (17) is provided on the frame portion (10) and, by means of a locking part (18), prevents the further caster (7) from swivelling, and wherein the locking part (18) is relieved of its locking function when a further trolley (1') is pushed into the trolley (1) during the nesting process, **characterised in that** the locking mechanism (17) is arranged on the rear region (12) of the frame portion (10), **in that** the locking part (18) is pivotably mounted on a horizontal shaft (19) and **in that**, for the purpose of unlocking the caster (7), the upper region of the locking part (18) is intended to strike the wheel frame (5) of the trolley (1') to be pushed in.

2. A trolley according to claim 1, **characterised in that** the locking part (18) is either curved downwards in its upper region or is provided with a rolling member in order to form a striking or contact surface (23).

3. A trolley according to claim 2, **characterised in that** the highest point (24) of the striking or contact surface (23) is arranged closer to the front end (3) of the trolley (1, 1') than the horizontal shaft (19) for the locking part (18).

4. A trolley according to any one of claims 1 to 3, **characterised in that** the frame portion (10) is V-shaped, the caster (7) and the locking mechanism (17) being arranged in the region in which the arms of the V-shaped frame (27) meet.

5. A trolley according to any one of claims 1 to 4, **characterised in that** the underside (4) of the wheel frame (5) is intended to strike the locking part (18) of a preceding trolley (1).

6. A trolley according to any one of claims 1 to 5, **characterised in that** an impact surface (16) for the locking part (18) of a preceding trolley (1) is provided on the underside (4) of the wheel frame (5).

7. A trolley according to any one of claims 1 to 6, **characterised in that** a downwardly extending projection (28) is arranged on the underside (4) of the wheel frame (5) and is provided for striking the locking part (18) of a preceding trolley (1).

8. A trolley according to any one of claims 1 to 7, **characterised in that** the locking part (18) is guided around the frame portion (10) downstream of a rear boundary (13) thereof.

## Revendications

1. Chariot de transport (1), qui peut être imbriqué de manière à économiser de la place dans un chariot de transport semblable (1'), dont le châssis (5), qui porte une plate-forme de chargement (9), est doté à l'avant et à l'arrière de roulettes de guidage (6), et qui comporte une portion de cadre (10) orientée de l'avant (2) du châssis (5) vers l'arrière, qui porte une autre roulette de guidage (7), un mécanisme de verrouillage (17) étant prévu sur la portion de cadre (10), ce mécanisme de verrouillage (17) étant apte, à l'aide d'une pièce de verrouillage (18), à empêcher l'autre roulette de guidage (7) de pivoter, la pièce de verrouillage (18) étant alors déchargée de sa fonction de verrouillage, lorsqu'un autre chariot de transport (1') est glissé dans le chariot de transport (1) lors du processus d'empilement, **caractérisé en ce que** le mécanisme de verrouillage (17) est disposé à la partie arrière (12) de la portion de cadre (10), **en ce que** la pi è ce de verrouillage (18) est montée pivotante sur un axe horizontal (19), et **en ce que** la pièce de verrouillage (18) est destinée à buter avec sa partie supérieure contre le châssis (5) du chariot de transport (1') à imbriquer dans le but de déverrouiller la roulette de guidage (7).

2. Chariot de transport selon la revendication 1, **caractérisé en ce que**, dans sa zone supérieure, la pièce de verrouillage (18) soit est courbée en forme d'arc vers le bas, soit est dotée d'un élément roulant pour former une surface de butée ou de portée (23).

3. Chariot de transport selon la revendication 2, **caractérisé en ce que** le point le plus haut (24) de la surface de butée ou de portée (23) est disposé plus près de l'extrémité avant (3) du chariot de transport (1, 1') que l'axe horizontal (19) pour la pièce de verrouillage (18).

4. Chariot de transport selon l'une quelconque des revendications 1 à 3, **caractérisé en ce que** la portion de cadre (10) est configurée en forme de V, la roulette de guidage (7) et le mécanisme de verrouillage (17) étant disposés dans la zone dans laquelle les branches du cadre en forme de V (27) se rencontrent.

5. Chariot de transport selon l'une quelconque des revendications 1 à 4, **caractérisé en ce que** la face inférieure (4) du châssis (5) est destinée à buter sur la pièce de verrouillage (18) d'un chariot de transport (1) se trouvant devant.

6. Chariot de transport selon l'une quelconque des revendications 1 à 5, **caractérisé en ce que** sur la face inférieure (4) du châssis (5) est prévue une surface de rebondissement (16) destinée à la pi è ce de verrouillage (18) d'un chariot de transport (1) déjà imbriqué ou précédent dans le groupe de chariots imbriqués.

7. Chariot de transport selon l'une quelconque des revendications 1 à 6, **caractérisé en ce que** sur la face inférieure (4) du châssis (5) est disposée une saillie (28) dirigée vers le bas, qui est prévue pour buter sur la pi è ce de verrouillage (18) d'un chariot de transport (1) déjà imbriqué.

8. Chariot de transport selon l'une quelconque des revendications 1 à 7, **caractérisé en ce que** la pi è ce de verrouillage (18) est guidée derrière une limitation arrière (13) de la portion de cadre (10), autour de cette dernière.
